Europäisches Patentamt

European Patent Office

Office européen des brevets

(11) Numéro de publication: **0 253 710 B1**

# FASCICULE DE BREVET EUROPEEN

(45) Date de publication de fascicule du brevet:
28.08.91

(51) Int. Cl.⁵: **G05B 19/06**

(21) Numéro de dépôt: 87401541.5

(22) Date de dépôt: 02.07.87

(54) Dispositif de commande de lave-linge à microprocesseur, et composant électromécanique.

(30) Priorité: 10.07.86 FR 8610071

(43) Date de publication de la demande:
20.01.88 Bulletin 88/03

(45) Mention de la délivrance du brevet:
28.08.91 Bulletin 91/35

(84) Etats contractants désignés:
BE CH DE ES FR GR IT LI LU

(56) Documents cités:
DE-A- 3 302 029
FR-A- 2 365 151

(73) Titulaire: CIAPEM
137, rue de Gerland
F-69007 - Lyon(FR)

(72) Inventeur: Delhomme, Bernard
THOMSON-CSF SCPI 19, avenue de Messine
F-75008 Paris(FR)
Inventeur: Garofalo, François
THOMSON-CSF SCPI 19, avenue de Messine
F-75008 Paris(FR)
Inventeur: Gonon, Martine
THOMSON-CSF SCPI 19, avenue de Messine
F-75008 Paris(FR)

(74) Mandataire: Grynwald, Albert et al
THOMSON-CSF SCPI
F-92045 PARIS LA DEFENSE CEDEX 67(FR)

## Description

L'invention est relative à un lave-linge à fonctionnement automatique sous la commande d'un programmateur, et en particulier relative à un dispositif de commande du fonctionnement d'un lave-linge comprenant un microprocesseur et un composant électromécanique avec des interrupteurs. Un tel dispositif est déjà connu de l'art antérieur (voir DE-A-3 303 992).

Un lave-linge comporte habituellement un tambour perforé dans lequel est disposé le linge à laver et qui tourne autour d'un axe horizontal dans une cuve destinée à contenir l'eau de lavage ou de rinçage. A l'heure actuelle pratiquement tous les lave-linge d'usage domestique sont à fonctionnement automatique, l'utilisateur ayant seulement à composer un programme - à l'aide de touches, boutons rotatifs ou analogues sur le tableau de commande de la machine - et à commander le démarrage de l'exécution du programme ainsi composé.

Une opération de lavage exécutée par le lave-linge sous la commande d'un programmateur comprend plusieurs phases : la première est une phase de prélavage, la seconde est une phase de lavage à laquelle succède habituellement un refroidissement ; puis on procède à plusieurs (par exemple quatre) opérations de rinçage, et la dernière phase est l'essorage du linge. Bien entendu certaines de ces opérations peuvent, au gré de l'utilisateur, être supprimées par exemple le prélavage ou l'essorage.

Il existe deux types principaux de programmateurs, l'un de nature essentiellement électronique, en général à microprocesseur, et l'autre de nature essentiellement électromécanique à moteur synchrone entraînant une ou plusieurs cames agissant sur l'état d'interrupteurs qui commandent divers organes du lave-linge tels que l'électrovanne d'alimentation en eau, la pompe de vidange ou le moteur d'entraînement du tambour.

L'inconvénient d'un programmateur de type essentiellement electromécanique est sa complexité et son prix. L'inconvénient d'un programmateur de type surtout électronique est qu'il n'est pas possible, pour un faible coût, de maintenir en mémoire l'état d'avancement du programme de lavage en cas d'interruption de l'alimentation en courant électrique de la machine ; en outre avec un tel programmateur du type électronique les moyens permettant l'acquisition et l'affichage du programme choisi ainsi que les relais de commande des éléments de puissance (telle que la résistance chauffante) sont d'un prix relativement élevé.

L'invention se rapporte à un programmateur ou dispositif de commande de lave-linge qui présente les avantages des programmateurs connus sans leurs inconvénients.

Le dispositif de commande du fonctionnement d'un lave-linge selon l'invention est caractérisé en ce que le microprocesseur commande le programme de lavage et le composant électromécanique comporte un moteur électrique entraînant une ou plusieurs cames agissant sur l'état des interrupteurs, ces cames étant utilisées seulement pour représenter l'avancement du programme de lavage, des signaux représentant les états de ces interrupteurs, et donc l'avancement du programme de lavage, étant appliqués à une entrée commune du microprocesseur.

Ainsi le câblage est beaucoup plus simple qu'avec un programmateur du type uniquement électromécanique car ces interrupteurs ne sont utilisés que pour représenter l'avancement du programme de lavage. La connexion à une entrée commune du microprocesseur simplifie également le câblage. De plus on bénéficie de l'avantage des programmateurs électromécaniques : l'état d'avancement du programme est gardé en mémoire en cas d'interruption de l'alimentation en énergie électrique.

En outre on peut profiter de ce programmateur électromécanique pour composer et afficher le programme : ce dernier est choisi par un positionnement angulaire d'une came et, de même, l'avancement des programmes et leur état peut être visualisé par la rotation et la position de cette came.

Dans une réalisation chaque interrupteur du composant électromécanique relié à l'entrée commune du microprocesseur est en série avec une résistance dont une borne est connectée à une source de potentiel déterminé, l'autre borne étant reliée à l'entrée commune du microprocesseur. Les valeurs des résistances sont telles que les potentiels de la borne reliée à l'entrée commune du microprocesseur aient des valeurs distinctes pour les divers états possibles des interrupteurs du composant électromécanique.

Le signal représentant les états des interrupteurs du composant électromécanique est, de préférence, appliqué à l'entrée commune du microprocesseur par l'intermédiaire d'un interrupteur commandé tel qu'un transistor dont le temps de conduction, à chaque période d'un signal alternatif, dépend de la valeur de la (ou des) résistance (s) en série avec l'interrupteur (ou les interrupteurs) fermé (s) du composant électromécanique.

D'autres caractéristiques et avantages de l'invention apparaîtront avec la description de certains de ses modes de réalisation, celle-ci étant effectuée en se référant aux dessins ci-annexés sur lesquels :

- la figure 1 est un schéma d'un dispositif de commande de lave-linge selon l'invention, et
- les figures 2$_a$ et 2$_b$ sont des diagrammes illustrant en partie le fonctionnement du dispositif de la figure 1.

L'exemple se rapporte à un lave-linge d'usage ménager du type à tambour perforé tournant autour d'un axe horizontal dans une cuve contenant l'eau de lavage ou de rinçage.

Avant la mise en marche de la machine, les diverses pièces de linge sont introduites dans le tambour. La mise en marche s'effectue après sélection d'un programme pour lequel l'utilisateur affiche un certain nombre de données liées au linge telles que le type de linge, la température désirée de lavage, la vitesse de rotation du tambour pour l'essorage, la quantité de linge introduit et le degré de salissure.

En plus de la température de lavage et de la vitesse de rotation du tambour lors de l'essorage ainsi que des données explicitement affichées par l'utilisateur (prélavage ou non, suppression ou maintien de l'essorage, etc...), les paramètres de fonctionnement du lave-linge qui dépendent de la composition du programme sont, notamment, le volume d'eau, le temps de chaque opération, l'énergie de brassage, le nombre de rinçages et la quantité de produit lessiviel.

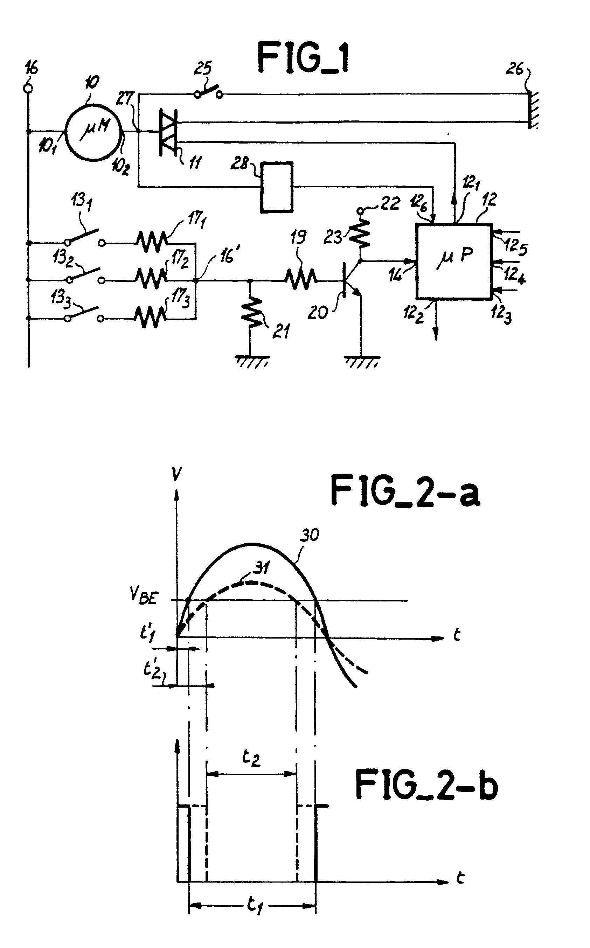

Pour la commande automatique du lave-linge on prévoit un programmateur représenté schématiquement sur la figure 1. Ce programmateur comporte un composant électromécanique avec un micromoteur 10, par exemple de type synchrone, alimenté par le réseau alternatif par l'intermédiaire soit d'un triac 11, dont la conduction est commandée par un microprocesseur 12, soit d'un interrupteur 25 du composant électromécanique comme on le verra plus loin.

Le moteur 10 entraîne une ou plusieurs cames (non représentées). La position angulaire de la came détermine l'état - ouvert ou fermé - d'interrupteurs $13_1$, $13_2$ et $13_3$ qui, contrairement aux programmateurs électromécaniques classiques, ne commandent pas directement le fonctionnement du moteur électrique d'entraînement du tambour. Ces interrupteurs $13_1$, $13_2$ et $13_3$ ont pour rôle de fournir à l'entrée du microprocesseur 12 une information sur l'avancement du programme de lavage, ce qui détermine la phase du programme à exécuter, en particulier pour la rotation du moteur d'entrainement du tambour et le temps de cette phase. C'est le microprocesseur 12 qui commande, par l'intermédiaire de circuits interfaces (non représentés), l'alimentation du moteur d'entrainement du tambour et son sens de marche. En outre, ce microprocesseur 12 contrôle, grâce au triac 11, la rotation du micromoteur 10 et donc l'avancement du programme.

Certains des interrupteurs du programmateur électromécanique commandent, de façon classique, directement d'autres organes du lave-linge tels que la résistance de chauffage de l'eau, la pompe de vidange et les électrovannes.

Outre la sortie $12_1$ reliée à la gâchette du triac 11, le microprocesseur présente une sortie $12_2$ de commande du moteur d'entraînement du tambour, une entrée $12_3$ provenant d'un capteur de température de l'eau de lavage ou de prélavage, une entrée $12_4$ recevant un signal représentatif du niveau de l'eau dans la cuve, une entrée $12_5$ sur laquelle est appliquée un signal représentant la vitesse d'essorage désirée, et une entrée $12_6$ dont la fonction sera décrite plus loin.

Par contre le microprocesseur 12 présente une seule entrée 14 sur laquelle sont appliqués les signaux représentant les états des interrupteurs $13_1$, $13_2$ et $13_3$.

Une première borne de chacun des interrupteurs $13_1$, $13_2$, et $13_3$ est reliée à une borne 16 du réseau d'alimentation en courant alternatif. Les secondes bornes des interrupteurs $13_1$, $13_2$ et $13_3$ sont reliées à un point commun 16' par l'intermédiaire de résistances respectivement $17_1$, $17_2$, $17_3$, toutes de valeurs distinctes.

Le point commun 16' aux résistances $17_1$, $17_2$, et $17_3$ est relié à la base d'un transistor 20, de type NPN dans l'exemple, par l'intermédiaire d'une résistance 19. Cette borne 16' est également connectée à la masse par l'intermédiaire d'une autre résistance 21.

Le collecteur du transistor 20 est relié à l'entrée 14 du microprocesseur 12 et il reçoit également une tension continue de référence appliquée sur une borne 22 par l'intermédiaire d'une résistance 23. Enfin l'émetteur du transistor 20 est relié à la masse.

Quand tous les interrupteurs $13_1$, $13_2$, et $13_3$ sont ouverts, la base du transistor 20 est en l'air et celui-ci reste bloqué. Dans ces conditions l'entrée 14 du microprocesseur 12 ne reçoit aucun signal.

Quand un (ou plusieurs) interrupteur(s) 13 est fermé, sur la base du transistor 20 est appliqué un potentiel alternatif proportionnel à la tension du secteur et dont l'amplitude dépend de la valeur de la résistance (ou des résistances) en série avec l'interrupteur (ou les interrupteurs) fermé(s).

A chaque alternance de la tension alternative du secteur le transistor 20 est conducteur pendant un temps qui est fonction de l'amplitude du signal alternatif appliqué sur sa base. En effet (figure $2_a$) le transistor 20 est conducteur lorsque sa tension base-émetteur dépasse un seuil de conduction $V_{BE}$ et le temps de conduction au cours de chaque alternance est d'autant plus important que l'amplitude du signal alternatif est plus importante. Cette propriété est illustrée sur les diagrammes des figures $2_a$ et $2_b$. Sur ces diagrammes le temps t a été porté en abscisses et la tension V en ordonnées.

Le diagramme de la figure $2_a$ représente la

variation de la tension base-émetteur du transistor 20 pour deux amplitudes différentes, la courbe en trait plein 30 correspondant à une amplitude plus importante que pour la courbe 31 en traits interrompus. Le diagramme de la figure 2$_b$ représente la variation du potentiel du collecteur du transistor 20 en fonction du temps t. Le potentiel du collecteur est nul quand le transistor 20 est conducteur. On voit que le temps t$_1$ de conduction du transistor 20 lors de l'application du signal 30 est plus important que le temps de conduction t$_2$ quand le signal 31 est appliqué sur la base du transistor 20.

Le microprocesseur 12 est programmé pour transformer, à chaque alternance, la durée t$_1$ ou t$_2$ en un nombre binaire. Ce nombre représente l'état des interrupteurs 13$_1$, 13$_2$, et 13$_3$.

En variante le signal sur l'entrée 14 du microprocesseur 12 n'est pas déterminé par le temps t$_1$ ou t$_2$ mais par le temps t'$_1$ ou t'$_2$ séparant le début de l'alternance du début de la conduction du transistor 20 ou autre interrupteur commandé.

L'état des interrupteurs 13 dépend de la position de la came ou des cames entraînée (s) par le moteur 10 et donc de l'avancement du programme de lavage. Ainsi la valeur du signal appliqué sur l'entrée 14 représente l'avancement du programme de lavage. En fonction de la valeur de ce signal, le microprocesseur commande le moteur d'entrainement du tambour, en agissant sur la conduction d'un triac (non montré) en série avec ce moteur. En outre le microprocesseur détermine aussi le temps d'exécution de chaque opération du programme de lavage. C'est pourquoi il commande, par sa sortie 12$_1$, l'alimentation du moteur 10 du composant électromécanique. Ce moteur 10 permet le passage d'une étape à une autre du programme de lavage.

On pourrait envisager que le microprocesseur 12 commande le passage d'un pas du programme à un autre en rendant le triac 11 conducteur pendant un temps déterminé ; mais une telle commande ne peut en général fonctionner correctement car le temps de passage d'un pas à un autre n'est pas constant en raison des dispersions inhérentes à la fabrication en grande série ; on a aussi constaté que, pour un même composant électromécanique, le temps de passage d'un pas à un autre peut varier. C'est pourquoi, selon une disposition importante de l'invention, le triac 11 est utilisé pour déclencher le passage d'un pas à un autre et ce triac 11 est coupé quand on a constaté que l'opération de passage de pas a débuté.

A cet effet, en série avec le moteur 10 est disposé un interrupteur 25 du composant électromécanique, c'est-à-dire un interrupteur dont l'état dépend de la position d'une came entraînée par le micromoteur 10.

Le microprocesseur 12 surveille, par l'entrée 12$_6$, l'état de conduction de l'interrupteur 25 et dès qu'il a détecté que cet interrupteur est fermé le triac 11 est ouvert.

Ce triac 11 est en parallèle avec l'interrupteur 25. Cet ensemble en parallèle est disposé entre une borne 10$_2$ du micromoteur 10 et la seconde borne 26 du réseau d'alimentation. La borne commune 27 au triac 11 et à l'interrupteur 25 qui est opposée à la borne 26 est reliée à l'entrée 12$_6$ par l'intermédiaire d'un circuit interface 28.

Le microprocesseur 12, le triac 11 et le circuit 28 sont disposés sur une même plaquette de circuit imprimé (non représentée). La configuration représentée sur la figure 1 présente alors l'intérêt qu'il suffit d'un seul fil conducteur 29 pour assurer, d'une part, la connexion du triac 11 au moteur 10 et, d'autre part, la surveillance de l'état de conduction de l'interrupteur 25. En effet le signal transmis sur l'entrée 12$_6$ par l'intermédiaire du circuit 28 représente la différence de potentiel entre les bornes 26 et 27 dont la valeur dépend de l'état de conduction de l'interrupteur 25.

Lorsque le microprocesseur 12 a déterminé qu'il était nécessaire de passer à l'étape suivante du programme de lavage il rend le triac 11 conducteur. Ainsi le moteur 10 commence à tourner. Pour permettre la surveillance de l'état de conduction de l'interrupteur 25, le triac 11 est ouvert périodiquement, par exemple pour une alternance sur dix du signal alternatif du réseau d'alimentation et, pendant ce temps, le microprocesseur utilise la donnée introduite par son entrée 12$_6$ pour déterminer si l'interrupteur est ouvert ou fermé. Si l'interrupteur est ouvert la borne 27 est en l'air et le circuit 28 transmet un signal binaire, qui est par exemple "0", sur l'entrée 12$_6$ représentant l'état ouvert de l'interrupteur 25. Dans ces conditions, après cette alternance, le triac 11 est de nouveau fermé et la lecture s'effectue encore périodiquement de la manière décrite. Quand l'interrupteur 25 est fermé le circuit 28 transmet un signal "1" sur l'entrée 12$_6$. Dans ce cas, après détection de ce signal, le triac 11 est ouvert.

A la fin du passage de pas l'interrupteur 25 s'ouvre, le triac 11 restant ouvert.

Les valeurs des résistances 17$_1$, 17$_2$, et 17$_3$ en série avec les interrupteurs 13$_1$, 13$_2$, et 13$_3$ sont telles que les temps de conduction du transistor 20 soient distincts pour les diverses combinaisons possibles d'états des interrupteurs.

Le dispositif de commande de lave-linge qui vient d'être décrit en relation avec les figures 1 et 2 présente les avantages suivants :

Il combine les avantages des dispositifs de type purement électronique et de type purement électromécanique, à savoir le maintien en mémoire de l'état d'avancement du programme de lavage (par la partie électromécanique du dispositif) et le grand nombre de possibilités offertes par le microprocesseur 12. Par contre sa partie électromécanique est nettement moins complexe que celle d'un dispositif de commande purement de ce type ; par rapport à un dispositif purement électronique il ne présente pas l'inconvénient de ne pouvoir garder en mémoire l'état d'avancement du programme de lavage en cas d'interruption de l'alimentation en énergie électrique.

En outre, le câblage est particulièrement simple, notamment parce que les états des interrupteurs 13 sont représentés par des signaux appliqués sur une entrée unique 14 du microprocesseur 12.

Dans une variante le microprocesseur 12 comporte plusieurs entrées 14 à chacune desquelles est associé un circuit analogue à celui comportant le transistor 20 et les interrupteurs $13_1$, $13_2$, $13_3$.

**Revendications**

1. Dispositif de commande du fonctionnement d'un lave-linge comprenant un microprocesseur (12) et un composant électromécanique avec des interrupteurs ($13_1$, $13_2$, $13_3$), caractérisé en ce que le microprocesseur (12) commande le programme de lavage et le composant electromécanique comporte un moteur électrique (10) entraînant une ou plusieurs cames agissant sur l'état des interrupteurs ($13_1$, $13_2$, $13_3$), ces cames étant utilisées seulement pour représenter l'avancement du programme de lavage, des signaux représentant les états de ces interrupteurs et donc l'avancement du programme de lavage, étant appliqués à une entrée commune (14) du microprocesseur (12).

2. Dispositif selon la revendication 1, caractérisé en ce que chaque interrupteur est en série avec une résistance ($17_1$, $17_2$, $17_3$) dont une borne est connectée à une source de potentiel déterminé, l'autre borne étant reliée à l'entrée commune (14) du microprocesseur les valeurs de ces résistances ($17_1$, $17_2$, $17_3$) étant telles que les potentiels sur la borne commune (16') reliée à l'entrée commune (14) du microprocesseur aient des valeurs distinctes pour les divers états possibles des interrupteurs ($13_1$, $13_2$, $13_3$) du composant électromécanique.

3. Dispositif selon la revendication 1 ou 2, caractérisé en ce que le signal représentant les états des interrupteurs ($13_1$, $13_2$, $13_3$) du composant électromécanique est appliqué à l'entrée commune (14) du microprocesseur (12) par l'intermédiaire d'un interrupteur commandé (20) dont le temps de conduction à chaque période d'un signal alternatif, dépend de la valeur d'une (des) résistance(s) ($17_1$, $17_2$, $17_3$) en série avec un interrupteur (ou plusieurs interrupteurs) du composant électromécanique.

4. Dispositif selon les revendications 2 et 3, caractérisé en ce que le potentiel déterminé appliqué à une borne de chaque résistance ($17_1$, $17_2$, $17_3$) en série avec un interrupteur ($13_1$, $13_2$, $13_3$) du composant électromécanique est le potentiel du réseau d'alimentation en courant alternatif.

5. Dispositif de commande du fonctionnement d un lave-linge comprenant un microprocesseur (12) et un composant électromécanique à interrupteurs ($13_1$, $13_2$, $13_3$), caractérisé en ce que :

le microprocesseur (12) commande le programme de lavage,

le composant électromécanique comporte un moteur électrique (10) entraînant une ou plusieurs cames agissant sur l'état des interrupteurs ($13_1$, $13_2$, $13_3$), ces cames étant utilisées seulement pour représenter l'avancement du programme de lavage

chaque interrupteur étant en série avec une résistance ($17_1$, $17_2$, $17_3$) dont une borne est connectée à une source de potentiel déterminé, les résistances ayant une borne commune (16') reliée à une entrée commune (14) du microprocesseur, les valeurs de ces résistances ($17_1$, $17_2$, $17_3$) étant telles que les potentiels sur la borne commune (16') reliée à l'entrée commune (14) du microprocesseur aient des valeurs distinctes pour les divers états possibles des interrupteurs ($13_1$, $13_2$, $13_3$) du composant électromécanique,

le signal représentant les états des interrupteurs ($13_1$, $13_2$, $13_3$), et donc l'avancement du programme de lavage, est appliqué à l'entrée commune (14) du microprocesseur (12) par l'intermédiaire d'un interrupteur commandé (20) dont le temps de conduction, à chaque période d'un signal alternatif, dépend de la valeur d'une (des) résistance(s) ($17_1$, $17_2$, $17_3$) en série avec un interrupteur (ou plusieurs interrupteurs) du composant électromécanique.

6. Dispositif selon la revendication 5, caractérisé en ce que le potentiel déterminé appliqué à une borne de chaque résistance ($17_1$, $17_2$, $17_3$) en série avec un interrupteur ($13_1$, $13_2$, $13_3$) du composant électromécanique est le potentiel du réseau d'alimentation en courant alternatif.

**Claims**

1. A control device for the function of a washing machine comprising microprocessor and an electromechanical component with switches ($13_1$, $13_2$ and $13_3$), characterized in that the microprocessor (12) controls the washing program and the electromechanical component comprises an electric motor (10) driving one or more cams acting on the condition of the switches ($13_1$, $13_2$ and $13_3$), said cams being utilized solely in order to represent the progress of the washing program, signals, which represent the condition of the said switches and hence the progress of the washing program, being applied to a common input (14) of the microprocessor (12).

2. The device as claimed in claim 1, characterized in that each switch is in series with a resistor ($17_1$, $17_2$ and $17_3$) of which one terminal is connected with a source of predetermined potential and of which the other terminal is connected with the common input (14) of the microprocessor, the values of the said resistors ($17_1$, $17_2$ and $17_3$) being such that the potentials at the common terminal (16') connected with the common input (14) of the microprocessor have distinct values for the different possible conditions of the switches ($13_1$, $13_2$ and $13_3$) of the electromechanical component.

3. The device as claimed in claim 1 or claim 2, characterized in that the signal representative of the conditions of the switches ($13_1$, $13_2$ and $13_3$) of the electromechanical component is applied to the common input (14) of the microprocessor (12) by way of a controlled switch (20) whose on time, in each cycle of an alternating signal, is dependent on the value of the one or more resistors ($17_1$, $17_2$ and $17_3$) in series with a switch (or a plurality of switches) of the electromechanical component.

4. The device as claimed in claims 2 and 3, characterized in that the predetermined potential applied to a terminal of each resistor ($17_1$, $17_2$ and $17_3$) in series with a switch ($13_1$, $13_2$ and $13_3$) of the electromechanical component is the potential of a public electricity supply line.

5. A control device for the function of a washing machine comprising a microprocessor (12) and an electromechanical component with switches ($13_1$, $13_2$ and $13_3$), characterized in that:
   the microprocessor (12) controls the washing program,
   the electromechanical component comprises an electric motor (10) driving one or more cams acting on the condition of the switches ($13_1$, $13_2$ and $13_3$), said cams being utilized solely as representative of the progress of the washing program,
   each switch being in series with a resistor ($17_1$, $17_2$ and $17_3$) whose one terminal is connected with a source of predetermined potential, said resistors having a common terminal (16') connected with a common input (14) of the microprocessor, the values of these resistors ($17_1$, $17_2$ and $17_3$) being such that the potentials at the common terminal (16') connected with the common input (14) of the microprocessor have distinct values for different possible conditions of the switches ($13_1$, $13_2$ and $13_3$) of the electromechanical component, and
   the signal representative of the conditions of the switches ($13_1$, $13_2$ and $13_3$) and consequently the progress of the washing program, is applied at common input (14) of the microprocessor (12) by way of a controlled switch (20) whose on time, in each cycle of an alternating signal, is dependent on the value of one or more resistors ($17_1$, $17_2$ and $17_3$) in series with a switch or with a plurality of switches of the electromechanical component.

6. The device as claimed in claim 5, characterized in that the predetermined potential applied to a terminal of each resistor ($17_1$, $17_2$ and $17_3$) in series with a switch ($13_1$, $13_2$ and $13_3$) of the electromechanical component is the potential of the public electricity supply line.

**Patentansprüche**

1. Steuervorrichtung für den Betrieb einer Waschmaschine, mit einem Mikroprozessor (12) und einem elektromechanischen Bauteil mit Unterbrechern ($13_1$, $13_2$, $13_3$), dadurch gekennzeichnet, daß der Mikroprozessor (12) das Waschprogramm steuert und das elektromechanische Bauteil einen Elektromotor (10) aufweist, der eine oder mehrere Hocken antreibt, die auf den Zustand der Unterbrecher ($13_1$, $13_2$, $13_3$) einwirken, wobei diese Hocken ausschließlich zur Angabe des Ablaufs des Waschprogramms verwendet werden, wobei Signale, die die Zustände dieser Unterbrecher und folglich den Ablauf des Waschprogramms angeben, in einen gemeinsamen Eingang (14) des Mikroprozessors (12) eingegeben werden.

2. Vorrichtung gemäß Anspruch 1, dadurch gekennzeichnet, daß jeder Unterbrecher mit einem Widerstand ($17_1$, $17_2$, $17_3$) in Reihe ge-

schaltet ist, von dem ein Anschluß mit einer Quelle eines bestimmten Potentials verbunden ist und dessen anderer Anschluß mit dem gemeinsamen Eingang (14) des Mikroprozessors verbunden ist, wobei die Werte dieser Widerstände ($17_1$, $17_2$, $17_3$) derart sind, daß die potentiale am gemeinsamen Anschluß (16'), der mit dem gemeinsamen Eingang (14) des Mikroprozessors verbunden ist, für die verschiedenen möglichen Zustände der Unterbrecher ($13_1$, $13_2$, $13_3$) des elektromechanischen Bauteils unterschiedliche Werte besitzen.

3. Vorrichtung gemäß Anspruch 1 oder 2, dadurch gekennzeichnet, daß das die Zustände der Unterbrecher ($13_1$, $13_2$, $13_3$) des elektromechanischen Bauteils angebende Signal an den gemeinsamen Eingang (14) des Mikroprozessors (12) über einen dazwischengeschalteten, gesteuerten Unterbrecher (20) eingegeben wird, dessen Durchlaßzeit in jeder Periode eines Wechselstromsignals vom Wert eines (der) Widerstandes (Widerstände) ($17_1$, $17_2$, $17_3$) abhängt, der (die) mit einem Unterbrecher (oder einer Mehrzahl von Unterbrechern) des elektromechanischen Bauteils in Reihe geschaltet ist (sind).

4. Vorrichtung gemäß Anspruch 2 und 3, dadurch gekennzeichnet, daß das bestimmte Potential, das an einen Anschluß eines jeden mit einem Unterbrecher ($13_1$, $13_2$, $13_3$) des elektromechanischen Bauteils in Reihe geschalteten Widerstandes ($17_1$, $17_2$, $17_3$) angelegt wird, das Potential des Wechselstrom-Versorgungsnetzes ist.

5. Steuervorrichtung für den Betrieb einer Waschmaschine, mit einem Mikroprozessor (12) und einem elektromechanischen Bauteil mit Unterbrechern ($13_1$, $13_2$, $13_3$), dadurch gekennzeichnet, daß:

der Mikroprozessor (12) das Waschprogramm steuert,

das elektromechanische Bauteil einen Elektromotor (10) aufweist, der eine oder mehrere Nocken antreibt, die auf den Zustand der Unterbrecher ($13_1$, $13_2$, $13_3$) einwirken, wobei diese Nocken ausschließlich zur Angabe des Ablaufs des Waschprogramms verwendet werden,

jeder Unterbrecher mit einem Widerstand ($17_1$, $17_2$, $17_3$) in Reihe geschaltet ist, von dem ein Anschluß mit einer Quelle eines bestimmten Potentials verbunden ist, wobei die Widerstände einen gemeinsamen Anschluß (16') besitzen, der mit einem gemeinsamen Eingang (14) des Mikroprozessors verbunden ist, wobei die Werte dieser Widerstände ($17_1$, $17_2$, $17_3$) derart sind, daß die Potentiale am mit dem gemeinsamen Eingang (14) des Mikroprozessors verbundenen gemeinsamen Anschluß (16') für die verschiedenen möglichen Zustände der Unterbrecher ($13_1$, $13_2$, $13_3$) des elektromechanischen Bauteils unterschiedliche Werte besitzen,

das die Zustände der Unterbrecher ($13_1$, $13_2$, $13_3$) und folglich den Ablauf des Waschprogramms angebende Signal an den gemeinsamen Eingang (14) des Mikroprozessors (12) über einen dazwischengeschalteten, gesteuerten Unterbrecher (20) eingegeben wird, dessen Durchlaßzeit in jeder Periode eines Wechselstromsignals vom Wert eines (der) Widerstandes (Widerstände) ($17_1$, $17_2$, $17_3$) abhängt, der (die) mit einem Unterbrecher (oder einer Mehrzahl von Unterbrechern) des elektromechanischen Bauteils in Reihe geschaltet ist (sind).

6. Vorrichtung gemäß Anspruch 5, dadurch gekennzeichnet, daß das bestimmte Potential, das an einen Anschluß eines jeden mit einem Unterbrecher ($13_1$, $13_2$, $13_3$) des elektromechanischen Bauteils in Reihe geschalteten Widerstandes ($17_1$, $17_2$, $17_3$) angelegt wird, das Potential des Wechselstrom- Versorgungsnetzes ist.

# FIG_1

# FIG_2-a

# FIG_2-b